# Europäisches Patentamt
## European Patent Office
## Office européen des brevets

(19)

(11) Veröffentlichungsnummer: **0 014 949**
B1

(12) **EUROPÄISCHE PATENTSCHRIFT**

(45) Veröffentlichungstag der Patentschrift: **22.06.83**

(51) Int. Cl.³: **H 02 G 9/08, A 62 C 3/16**

(21) Anmeldenummer: **80100715.4**

(22) Anmeldetag: **13.02.80**

(54) Brandschutzabschluss zur Abschottung in einem Kabelkanal.

(30) Priorität: **14.02.79 DE 2905563**

(43) Veröffentlichungstag der Anmeldung:
**03.09.80 Patentblatt 80/18**

(45) Bekanntmachung des Hinweises auf die Patenterteilung:
**22.06.83 Patentblatt 83/25**

(84) Benannte Vertragsstaaten:
**AT BE CH DE FR GB IT LU NL SE**

(56) Entgegenhaltungen:
**AT - B - 332 476**
**CH - A - 457 574**
**FR - A - 357 883**
**US - A - 1 684 646**
**US - A - 3 964 125**

(73) Patentinhaber: **Flughafen Frankfurt/Main AG**
**D-6000 Frankfurt (Main) 75 (DE)**

(72) Erfinder: **Rössler, Ralf**
**Flurscheideweg 26**
**D-6000 Frankfort/Main Sossenheim (DE)**
Erfinder: **Schulz, Hans Egmund**
**Im Teich 69**
**D-6085 Nauheim (DE)**

(74) Vertreter: **Lotterhos, Hans Walter, Dr.-Ing.**
**Lichtensteinstrasse 3**
**D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Brandschutzabschluß zur Abschottung in einem Kabelkanal

Die Erfindung bezieht sich auf einen Brandschutzabschluß zur Abschottung in einem Kabelkanal. Durch in gewissen Abständen im Kabelkanal anzuordnende Brandschutzabschlüsse oder Rauchgassperren soll der Kabelkanal im Falle eines Brandes im Kabelkanal unter Eingrenzung der Brandstelle abschnittsweise zumindest gegen Rauchgasdurchtritt abschottbar sein.

Es ist ein Brandschutzabschluß gemäß Oberbegriff des Patentanspruchs 1 bekannt (AT—B—332 476), bei dem der aus zwei vertikalen Stehern und diese Steher oben und unten verbindenden Rahmenschenkeln gebildete, rechteckförmige Türrahmen zusammen mit dem an einem der Steher angeschlagenen Türflügel um wenigstens eine vertikale Achse von der vorzugsweise aus einzelnen, lose aufeinander gelegten Ziegeln aus Mineralwolle aufgebauten Schottwand wegschwenkbar gelagert ist, um das Einziehen eines neuen Kabels und das Austauschen eines anderen Kabels einfacher und mit geringerer Gefahr einer Kabelschädigung möglich zu machen.

Nachteilig stellt sich an dieser bekannt gewordenen Lösung dar,

daß es sowohl bei einem seitlichen, neben einer Pritschenanordnung vorgesehenen Kabelgang wie auch bei einem mittleren, zwischen zwei Pritschenanordnungen vorgesehenen begehbaren Kabelgang für unbehinderte Kabelverlegearbeiten erforderlich ist, den Türabschluß insgesamt, d.h. Türrahmen mit daran angeschlagenem Türflügel, aus der Normal- bzw. Schließstellung in eine nicht betriebsbereite Position auszuschwenken,

daß der Türflügel nicht unabhängig vom ausgeschwenkten Türrahmen in die Schließstellung bewegbar und somit nicht für eine zumindest bedingte Rauchgasabschottung betriebsbereit ist,

daß ein Rückschwenken ausgeschwenkten Türrahmens in die Schließstellung nur möglich ist, wenn im Schwenkbereich des Türrahmens keine — auch keine eine nur vergleichsweise geringe Stärke bzw. Dicke aufweisende — Objekte, wie z.B. Werkzeuge, Kabelteile, sich am Boden befinden oder über die Pritschenanordnungen hinaus in den Kabelgang hineinragen,

daß beim Ausschwenken des Türrahmens aus der Normal- bzw. Schließstellung die in Normal- bzw. Schließstellung an den Türrahmen angrenzenden stationären Teile der Schottwand beschädigt oder zumindest aus ihrer Position verschoben werden, so daß nach Abschluß der Kabelarbeiten nicht nur der Türrahmen zurückzuschwenken, sondern auch die Beschädigungen zu beheben sind,

daß bei Normal- bzw. Schließstellung des Türrahmens und bei geöffnetem Türflügel durch den unteren Rahmenschenkel des Türrahmens eine sogenannte Stolperkante gegeben ist, die bei den Arbeiten im Kabelkanal und insbesondere bei einem etwa hastigen Durchlaufen des Kabelgangs Schwierigkeiten bereiten kann.

In anderem, sich nicht mit Kabelkanälen und mit darin auszuführenden Kabelarbeiten befassenden Zusammenhang ist es zum einen bekannt (US—A—3 964 125), an Türen eine elektromagnetische Türhalteeinrichtung vorzusehen, die es den Türen erlauben soll, im Falle eines Brandes automatisch zu schließen und somit in Gebäuden Bereiche abzuschotten, und zum anderen bekannt (FR—A—357 883), einen Türflügel im Bereich seiner beiden Längsseiten mit vertikalen an Ober- und Unterseite ausschiebbaren Lagerbolzen zu versehen, um diesen Türflügel wahlweise im Bereich seiner einen oder seiner anderen Türflügellängsseite anschlagen zu können.

Danach kann der Erfindung die Aufgabe als zugrundeliegend angesehen werden, es bei einem Brandschutzabschluß der im Oberbegriff des Patentanspruchs 1 angegebenen Gattung zu ermöglichen, daß die Kabelverlegearbeiten behindernden Teile des Türabschlusses auf einfache und rasche Weise aus dem Arbeitsbereich weg und in ihre Ursprungsposition zurückgebracht werden können und daß die Betriebsbereitschaft des Brandschutzabschlusses auch während der üblichen Kabelarbeiten gewährleistet ist.

Diese Aufgabe wird durch die im Kennzeichen des Patentanspruchs 1 angegebenen Merkmale gelöst.

Dadurch ist eine einfach zu erstellende und einzubauende sowie kostengünstige Möglichkeit zur Unterteilung eines Kabelkanals in durch Brandschutzabschlüsse abgegrenzte Kabelabschnitte gegeben. Die den Brandschutzabschluß bildenden Teile sind leicht zu handhaben. Im Bodenbereich des Brandschutzabschlusses sind quer verlaufende Hindernisse, sogenannte Stolperkanten, vermieden.

Das Schließen von sich normalerweise in Offenstellung befindlichen Teilen eines Brandschutzabschlusses soll durch Feuermelder, beispielsweise Ionisations-Feuermeldeanlagen, gesteuert sein. Von den Feuermeldern ist im Bereich eines jeden durch zwei Brandschutzabschlüsse begrenzbaren Kabelabschnitts mindestens einer anzuordnen. Die Feuermelder sollen vorzugsweise mit einer zentralen Feuermeldestelle in Verbindung stehen. Im Falle eines Brandes soll auf diese Weise der Kabelabschnitt, in dem sich der Brandherd befindet, gegenüber den übrigen Kabelabschnitten abgeschottet werden. Dadurch soll eine Lokalisierung des Brandherdes erreicht, dessen Ausbreitung zumindest gehemmt und dessen Bekämpfung auf Grund ungehinderten und rauchgasfreien Zugangs zum eingegrenzten Brandherd erleichtert werden.

Durch die Anwendung eines Türflügels, also einer zargenlosen Tür, ist das Verlegen von Kabeln und das Belegen der Kabelpritschen mit Kabeln ohne Behinderung durch vertikale Türpfosten oder dergleichen gegeben. Dadurch entfallen besondere Maßnahmen und Vorrichtungen, beispielsweise Umlenkeinrichtungen zum Umfädeln von vertikalen Teilen einer Zarge. Desweiteren sind Beschädigungen der Kabel beim Aus- und Verlegen im Kabelkanal weitgehend vermieden und der Zeitaufwand zum Verlegen von Kabeln ist erheblich reduziert. Der Türflügel kann um eine horizontale Achse schwenkbar gelagert an der Decke angeschlagen sein. Dabei ist der Türflügel in Offenstellung etwas unterhalb der Kanaldecke gehaltert und nach Lösen der Halterung durch einen Impuls des Feuermelders in Schließstellung bewegbar; die Bewegung bzw. Geschwindigkeit Türflügels in die Schließstellung ist durch Dämpfungseinrichtungen vorgebbar. Bei einer Türflügelanordnung mit vertikaler Schwenkachse ist der Türflügel sowohl im Bereich der Kanaldecke als auch im Bereich des Kanalbodens angeschlagen.

Durch die Rundum-Dichtung, die vorzugsweise im Bereich der Unterseite des Türflügels nach Art einer über den Kanalboden streifenden Dichtschürze ausgebildet ist, ist die Schließstellung des Türflügels praktisch stets erreichbar und dabei Spalte zwischen Türflügel und Umgebung vermieden.

Durch die Anwendung wenigstens eines Seitenanschlags ist ein sehr dicht schließender Brandschutzabschluß im vom Türflügel zu sperrenden Bereich des Kanalquerschnitts erreichbar. Durch entsprechende Vorgabe der Dichtungsmaterialien sowie der Anpreßkraft des Türflügels am Seitenanschlag wird eine ebenso zuverlässige Rauchgasabschottung erreichbar, wie bei einem in einer Türzarge aufgenommenen Türflügel, jedoch ohne den Nachteil ortsfester oder schwer handhabbarer Zargenbestandteil zu haben.

Eine Ausgestaltung der Erfindung besteht darin, daß der Türflügel im Bereich seiner Oberseite über einen Träger an der Kanaldecke und im Bereich seiner Unterseite über einen Träger am Kanalboden um eine vertikale Achse schwenkbar angeschlagen ist. Die Befestigung des Türflügels über Träger an Kanaldecke und Kanalboden hat den Vorzug, daß Schwankungen in der lichten Höhe des Kanalquerschnitts durch einfach zu montierende Träger auf einfache Weise ausgeglichen werden können.

Eine weitere Ausgestaltung der Erfindung besteht darin, daß der Türflügel wahlweise im Bereich seiner einen Längsseite oder im Bereich seiner anderen Längsseite anschlagbar ist. Dadurch ist beispielsweise bei einem zwischen zwei Pritschenanordnungen angeordneten Türflügel die Möglichkeit gegeben, bei Kanalarbeiten an der einen Pritschenanordnung den Türflügel im Bereich der anderen Pritschenanordnung schwenkbar anzuordnen, so daß die Betriebsbereitschaft des Türflügels während der Kanalarbeiten gegeben ist.

Eine weitere Ausgestaltung der Erfindung besteht darin, daß zum Anschlagen des Türflügels vertikal verschiebbare, in entsprechende Aufnahmeteile einsteckbare Lagerbolzen vorgesehen sind, vorzugsweise in Verbindung mit der weiteren Ausgestaltung, daß zum Anschlagen des Türflügels ein an der Oberseite des Türflügels ausschiebbarer und in ein gegen eine Rückstellkraft um eine vertikale Achse drehbares Aufnahmeteil am Träger drehfest einsteckbarer Lagerbolzen und zum Anschlagen an der Unterseite ein Stützlager vorgesehen ist. Durch diese Lagerbolzen, die vorzugsweise im Türflügel bzw. im Rahmen des Türflügels aufgenommen sind und durch Betätigungsmittel, wie Griffe oder Schlüssel, am Türflügel in entsprechende Aufnahmeöffnungen in Befestigungsmittel im Bereich der oberen und unteren Träger einschiebbar sind, ist eine rasch zu lösende und herzustellende Anschlagverbindung für den Türflügel gegeben. Diese ermöglicht eine einfache und schnelle Montage und Demontage sowie Änderung in der vertikalen Schwenkachsenanordnung für den Fall, daß der Türflügel entweder im Bereich der einen oder der anderen Längsseite des Türflügels schwenkbar angeschlagen werden soll.

Eine weitere Ausgestaltung der Erfindung besteht darin, daß als Stützlager ein am Kanalboden angeordneter Schwenkarm vorgesehen ist, der eine Aussparung zur drehfasten Aufnahme eines einsteckbaren Lagerbolzens aufweist.

Eine weitere Ausgestaltung der Erfindung besteht darin, daß der Türflügel aus einem Rahmen und einer Türfüllung aus einem durch Faustschläge oder Fußtritte zerstörbarem Material besteht. Dadurch ist sichergestellt, daß Personen, die in einem von Brandschutzabschlüssen abgeschottetem Kanalabschnitt eingeschlossen werden, nach Zerstörung der Türfüllung durch den Rahmen hindurchgelangen und den Kanalabschnitt verlassen können.

Eine weitere Ausgestaltung der Erfindung besteht darin, daß der Seitenanschlag an den Kabelpritschen einer Pritschenanordnung lösbar befestigt ist, wobei nach einer weiteren Ausgestaltung als Befestigungsmittel eine Klemmbügelhalterung vorgesehen ist.

Eine weitere Ausgestaltung der Erfindung besteht darin, daß der Seitenanschlag an wenigstens einem Pritschenholm einer Kabelpritsche anhängbar ist. Dadurch ist auf einfache Weise auch eine Zwischenlagerung von wegen Kabelarbeiten abgenommener Seitenanschläge eröffnet. Denn diese werden nicht am Kabelboden abgelegt und stellen damit auch nicht unter Umständen — trotz eines gewissen, durch eine flexible Dichtung abgeschirmten Raums (Bodenfreiheit) zwischen Kanalboden und Türflügel — ein Schließen des Türflügels in Frage. Vielmehr können die Seitenanschläge an einer Kabelpritsche, an der zur Zeit nicht gearbeitet wird,

5 0 014 949 6

oder an einer anderen Stelle aufgehängt werden.

Anhand der beigefügten Zeichnungen wird die Erfindung und deren Merkmale an einem Ausführungsbeispiel weiter erläutert.

Es zeigt schematisch:

Fig. 1 einen Querschnitt durch einen begehbaren Kabelkanal mit zwei seitlichen Pritschenanordnungen, von denen die rechtsseitige der übersichtlichkeit wegen ohne Pritschenabschottungen dargestellt ist, und einem zwischen diesen Pritschenanordnungen belassenen Mittelgang sowie mit einem um eine vertikale Achse schwenkbaren Türflügel in Offen- bzw. Normalstellung und mit einem Seitenanschlag für den Türflügel an der der vertikalen Achse fernen, hier linsseitigen Pritschenanordnung,

Fig. 2 in perspektivischer Ansicht nach Art einer Explosions-Darstellung einen Türflügel sowie einen oberen Träger und zwei untere Träger mit Befestigungsmitteln für den Türflügel,

Fig. 3 in vergrößertem Maßstab in einem Längsschnitt nach der Linie III—III den oberen Abschnitt des Türflügels nach Fig. 2 mit Türrahmen und darin befestigter Türfüllung,

Fig. 4 in vergrößertem Maßstab und in perspektivischer Darstellung den an drei Pritschenholmen der nach Fig. 1 linksseitigen Pritschenanordnung lösbar befestigten Seitenanschlag,

Fig. 5 in vergrößertem Maßstab in Richtung des Pfeils V gesehen, einen Ausschnitt des Seitenanschlags nach Fig. 4 mit Einhängehalterung am oberen Pritschenholm,

Fig. 6 in vergrößertem Maßstab in Richtung des Pfeils VI gesehen, einen Ausschnitt des Seitenanschlags nach Fig. 4 mit Klemmbügelhalterung am mittleren Pritschenholm und

Fig. 7 in vergrößertem Maßstab in perspektivischer Darstellung eine Pritschenabschottung zwischen zwei Kabelpritschen der linksseitigen Pritschenanordnung nach Fig. 1.

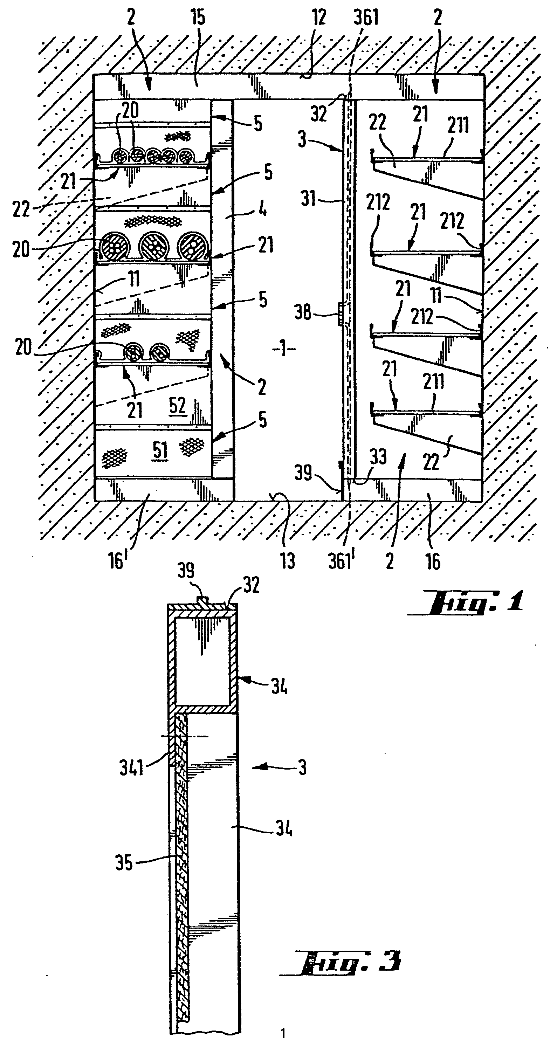

Der in Fig. 1 dargestellte Kabelkanal weist einen rechteckförmigen Querschnitt auf. Der lichte Kanalquerschnitt ist von den beiden Kabelwänden 11, der Kanaldecke 12 und dem Kanalboden 13 begrenzt. In diesem Kabelkanal laufen entlang der beiden Kabelwände 11 je eine Pritschenanordnung 2, so daß zwischen diesen Pritschenanordnungen 2 ein Mittelgang verbleibt. Dieser Mittelgang bildet hier den von den Pritschenanordnungen 2 noch belassenen Teil 1 des lichten Kanalquerschnitts.

Ein Brandschutzabschluß — zumindest gegen den freien Durchtritt von Rauchgas — eines derartigen Kabelkanals umfaßt sonach den Abschluß eines Kanalquerschnitts innerhalb der Pritschenanordnungen 2 und den Abschluß des von den Pritschenanordnungen 2 noch belassenen, übrigen Teils 1 des lichten Kanalquerschnitts. Zum Abschluß des Kabelkanalquerschnitts innerhalb der Pritschenanordnungen 2, die aus mehreren im Abstand übereinander auf Konsolen 22 angeordneten Kabelpritschen 21 zur Aufnahme von Kabeln 20 bestehen, sind — wie bei der in Fig. 1 linksseitigen Pritschenanordnung dargestellt — Pritschenabschottungen 5 vorgesehen. Die bei der rechtsseitigen Pritschenanordnung 2 vorhandenen Pritschenabschottungen 5 sind in Fig. 1 der Uebersichtlichkeit wegen nicht gezeigt. Zum Abschluß des zwischen den Pritschenanordnungen 2 gegebenen Mittelgangs ist hier eine zargenlose Tür mit einem selbsttätig schließenden Türflügel 3 vorgesehen. Der Türflügel 3 befindet sich in Fig. 1 in seiner Normaloder Offenstellung, in welcher er beispielsweise durch einen nicht dargestellten elektromagnetischen Schließer gehalten ist. Durch einen von einem Feuermelder gegebenen Impuls kann die durch den elektromagnetischen Schließer gegebene Halterung des Türflügels 3 in Offenstellung selbsttätig gelöst werden. Dadurch wird der stets von einer — in den Figuren nicht dargestellten — Schließ- bzw. Rückstellkraft belastete Türflügel 3 in seine Schließstellung geschwenkt und dort mit seinen Längsseiten 31 an den Pritschenanordnungen 2 oder an einem oder zwei Seitenanschlägen 4, von denen einer in Fig. 1 dargestellt ist, dicht anliegend gehalten.

Der hier um eine vertikale Schwenkachse im Bereich der in Fig. 1 gesehen rechten Längsseite 31 drehbare Türflügel 3 ist im Bereich der Oberseite 32 über einen Träger 15 an der Kanaldecke 12 und im Bereich der Unterseite 33 über einen an einer Seite in den Mittelgang hineinragenden Träger 16 am Kanalboden 13 angeschlagen. Auf der anderen Seite des Mittelgangs und im Abstand vom Träger 16, so daß eine sogenannte Stolperkante im Mittelgang entfällt, ist ein entsprechender Träger 16' am Kanalboden 13 fluchtend angeordnet. An diesem Träger 16' und an einer entsprechend darüber liegenden Stelle am Träger 15 sind ebenfalls Anschlagmittel vorgesehen. Daher kann eine vertikale Schwenkachse für den Türflügel 3 auch im Bereich dessen — in Fig. 1 gesehen — linksseitiger Längsseite 31 ausgebildet werden. Die Träger 15, 16, 16' ermöglichen einen einfachen Ausgleich von Boden- und Deckenungenauigkeiten im Kabelkanal.

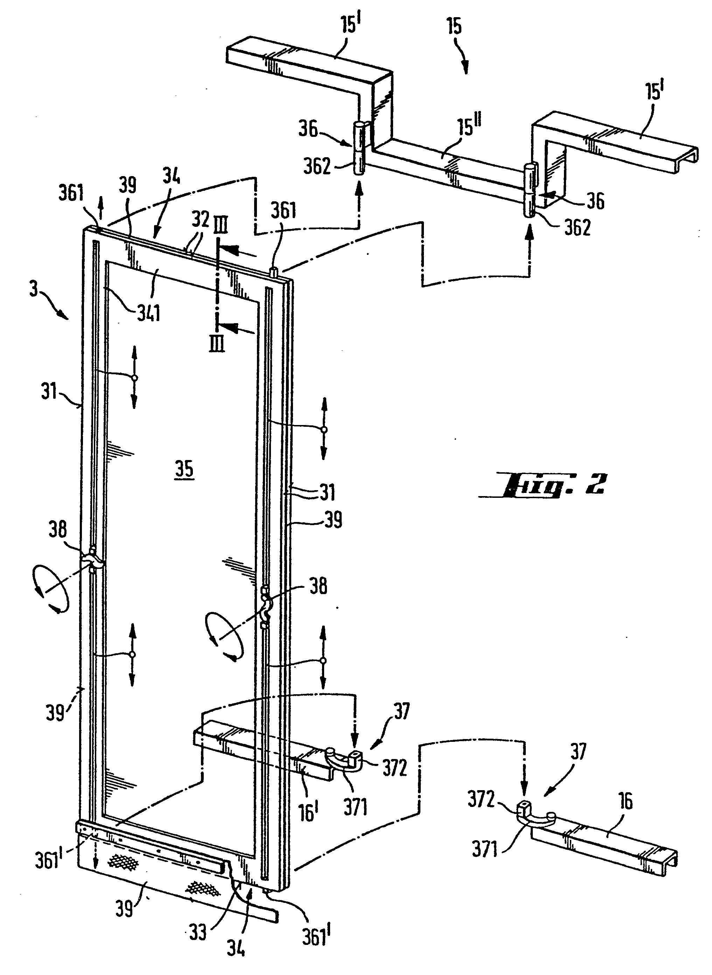

In Fig. 2 ist einer weitere Ausführung des Trägers 15 dargestellt, die — im Unterschied zu der des Trägers 15 in Fig. 1 — zwischen zwei Abschnitten 15' einen etwa U-förmig nach unten gezogenen mittleren Abschnitt 15" aufweist, dessen Boden als Kabelpritsche für Eigenversorgungsleitungen des Kabelkanals dient. In diesem Bereich des Kabelkanals sind zwar Kabelverlegungsarbeiten vorgleichsweise selten, gleichwohl ist auch für diesen U-förmigen Abschnitt eine — hier nicht gezeigte — Abschottung vorzusehen, die der nachstehend noch näher erläuterten Pritschenabschottung 5 zur Anpassung an unterschiedliche Kabelbelegungen entsprechen kann. Im Bereich der vertikalen Schenkel des U-förmigen Abschnitts 15″ sind hier jeweils Türflügelbefestigungen 36 vorgesehen, die hier ein Aufnahmeteil 362 aufweisen, das gegen eine Rückstell- bzw. Schließkraft um eine vertikale Achse schwenkbar ist. Die Rückstellkraft kann beispielsweise von einer nicht gezeigten, vorgespannten Torsionsfeder aufgebracht werden. Durch die Anwendung von einstellbaren Federn oder Federpaketen als Rückstell- bzw. Schließkraft ist ein von einer Energieversorgung von außen unabhängiger Antrieb gegeben, mit dem die Türschließgeschwindigkeit und auch der Andruck des Türflügels 3 in Schließstellung — beispielsweise am Seitenanschlag 4 — vorgegeben werden kann. Das Aufnahmeteil 362 ist hier mit einer Aussparung, einem Innenvierkant, versehen, in welche ein entsprechend ausgebildeter, am Türflügel angeordneter oberer Lagerbolzen 361 drehfest einsteckbar ist.

Als untere Türflügelbefestigung 37 sind den oberen Türflügelbefestigungen 36 zugeordnete Stützlager vorgesehen, die beispielsweise jeweils eine hier nicht gezeigte Aussparung zur drehbaren Aufnahme eines an der Unterseite 33 des Türflügels 3 ausschiebbaren Lagerbolzens 361′ aufweisen. In Fig. 2 ist als andere Ausführungsform der Stützlager jeweils ein einarmiger Schwenkarm 371 zum Umfahren eines nicht gezeigten Seitenanschlags 4 mit U-Profil an den Trägern 16, 16′ schwenkbar angeordnet. Die Schwenkachsen der Schwenkarme 371 entsprechen denen der oberen Türflügelbefestigungen 36. Am zum Mittelgang weisenden freien Ende des Schwenkarms 371 ist ein Aufnahmeteil 372 mit einer Innenvierkant-Aussparung vorgesehen. In diese Innenvierkant-Aussparung ist ein entsprechend ausgebildeter unterer Lagerbolzen 361′, der an der Unterseite 33 des Türflügels 3 ausschiebbar ist, drehfest einsteckbar.

Die oberen und unteren Lagerbolzen 361, 361′ sind hier vorzugsweise im Türrahmen 34 eingeordnet und sind im Bereich der Oberseite 32 und im Bereich der Unterseite 33 zum Anschlagen des Türflügels 3 ausschiebbar. Die Betätigung der beiden Lagerbolzen 361, falls — wie hier in Fig. 2 angedeutet — nach Art eines Stangenschlosses ausgebildet und miteinander gekoppelt, erfolgt gleichzeitig durch am Türflügel 3 greifbare Betätigungsmittel 38. Um ein Anschlagen des Türflügels 3 sowohl im Bereich dessen — in Fig. 1 und 2 gesehen — linker als auch rechter Längsseite 31 zu ermöglichen, sind zwei Paare von Lagerbolzen 361, 361′ vorgesehen, die ohne jegliche Hilfsmittel oder werkzeuge ein- und ausschiebbar sind. In Fig. 2 sind im Bereich der rechten Längsseite 31 des Türflügels 3 die Lagerbolzen 361, 361′ im ausgeschobenen Zustand dargestellt.

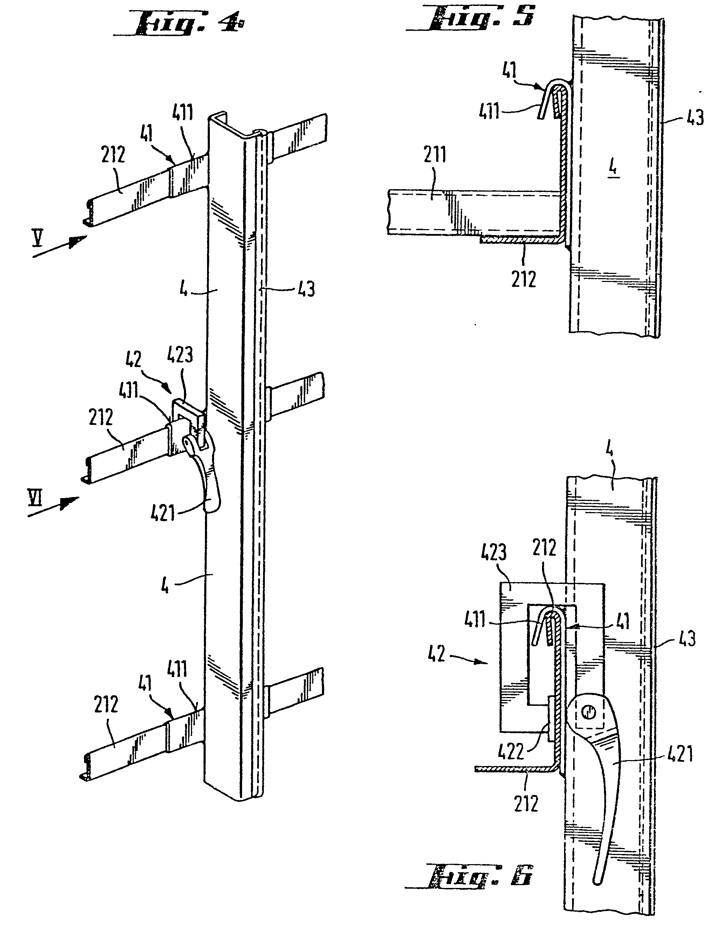

Der Türflügel 3 ist nach der Erfindung und wie in Fig. 3 ersichtlich, aus einem Türrahmen 34 und aus einer im Türrahmen 34 bzw. an einer daran ausgebildeten Anlage 341 — beispielsweise wie angedeutet durch Verschrauben — befestigten Türfullung 35 aufgebaut. Türrahmen 34 und Türfüllung 35 bestehen wenigstens aus feuerhemmendem, vorzugsweise aus feuerbeständigem Material. Das Material der Türfüllung 35 soll darüber hinaus vergleichsweise leicht und erfindungsgemäß durch Faustschläge oder Fußtritte, zerstörbar sein. Dadurch soll Personen, die in einem abgeschotteten Kanalabschnitt das Kabelkanals eingeschlossen werden, auf jeden Fall ein Fluchtweg offenbleiben, und zwar auch bei geschlossenen Türflügeln 3.

Der Türrahmen 34 ist vorzugsweise als Hohlprofil und dabei aus L-förmigen Profilteilen aufgebaut. Im Inneren der vertikalen Abschnitte des Profilrahmens sind zweckmäßigerweise die ausschiebbaren Lagerbolzen 361, 361′ und deren Betätigungsmechanismus aufgenommen. Dadurch ist ein Türflügel von vergleichsweise geringem Gewicht gegeben, so daß dessen Handhabung bei der Montage und Demontage im Kabelkanal von einer Person durchgeführt werden kann.

Der Türflügel 3 wird erfindungsgemäß mit einer sogenannten Rundum-Dichtlippe 39, die im Bereich der Unterseite 33 als Schürze ausgebildet sein kann (siehe Fig. 1 und 2), zur Abdichtung gegenüber dem Träger 15 an der Kanaldecke 12, gegenüber den Pritschenanordnungen 2 mit jeweils in einer Vertikalen fluchtenden Kabelpritschen 21 bzw. Konsolen 22 und gegenüber dem Kanalboden 13 ausgerüstet werden. Doch ist es für eine zuverlässige Rauchgasabschottung weiter wesentlich, die Schließstellung des Türflügels 3 — vorzugsweise an beiden Seiten — durch lösbar angeordnete Seitenanschläge 4 festzulegen. Die Seitenanschläge 4 sind erfindungsgemäß aus einfachen Profilteilen, insbesondere U-Profilteilen, aufgebaut. In Fig. 1 und 4 bis 6 ist ein Seitenanschlag 4 gezeigt, der an einer Pritschenanordnung 2, von der in Fig. 4 bis 6 Abschnitte von drei Pritschenholmen 212 zu sehen sind, lösbar befestigt ist. Zur Befestigung des Seitenanschlages 4 an den Pritschenholmen 212 sind hier Einhängehalterungen 41 für die Halterung des Seitenanschlags 4 am oberen und unteren und am mittleren Pritschenholm 212 sowie eine Klemmbügelhalterung 42 zur Festlegung der Position des Seitenanschlags 4 am mittleren Pritschenholm 212 vorgesehen. Die Einhängehalterung 41 besteht im wesentlichen aus einem hakenförmig abgebogenen Einhängeteil 411, das einerseits am Seitenanschlag 4 — beispielsweise durch Verschweißen — befestigt ist und andererseits mit dem hakenförmigen Teil über die Oberkante eines Pritschenholms 212 aufhängbar ist (siehe Fig. 5).

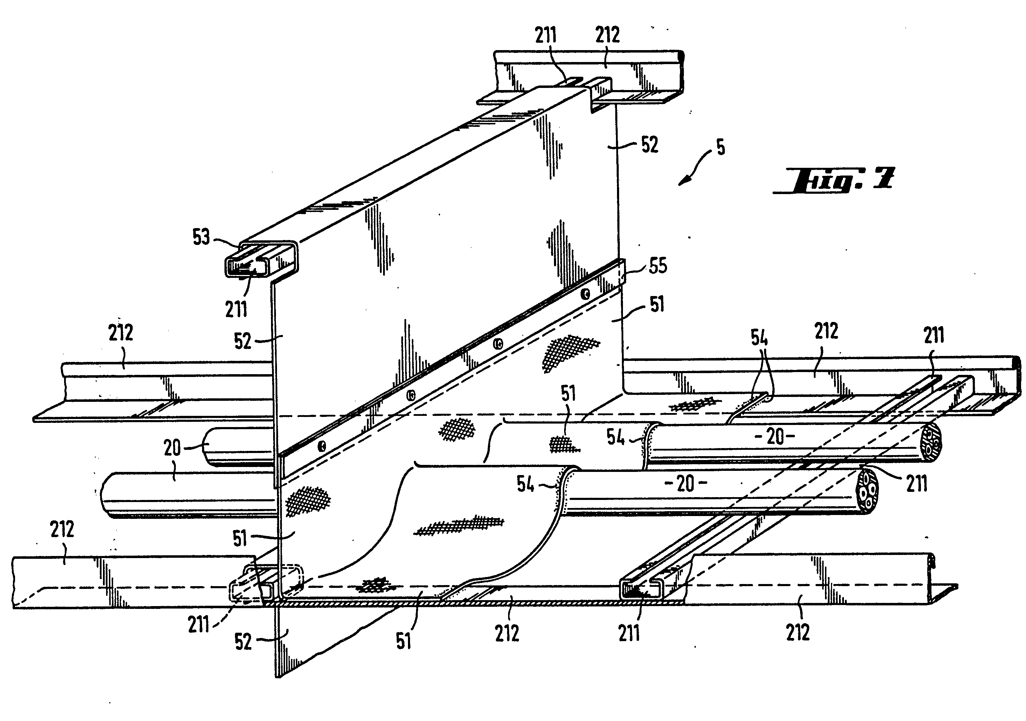

Die Klemmbügelhalterung 42 ist in Fig. 4 und 6 in Kombination mit einer Einhängehalterung 41 dargestellt. Sie besteht im wesentlichen aus einem in einem Joch 423 angeordneten Exzenterspannhebel 421 und aus einem mit diesem zusammenwirkenden, im Abstand davon gegenüberliegenden, am Joch 423 angeordneten Anschlag 422. Zwischen Anschlag 422 und dem schwenkbaren Exzenterspannhebel 421 sind hier der Pritschenholm 212 und ein Abschnitt des Einhängeteils 411 eingeordnet und werden bei Betätigen des Exzenterspannhebels 421 zwischen Anschlag 422 und Exzenterspannhebel 421 kraftschlüssig fixiert.

Sie Seitenanschläge 4, die vorzugsweise U-Querschnitt aufweisen oder aus U-Profilteilen aufgebaut sind, liegen mit einer Seite oder einem U-Schenkel dicht an der benachbarten Pritschenanordnung 2 an. Am anderen, freien U-Schenkel weisen sie vorzugsweise eine Dichtleiste 43 auf, die beim Türflügel 3 in Schließstellung an dessen Türrahmen 34 dichtend anliegt. Die Ausbildung der Seitenanschläge 4 als U-Profil hat zudem den Vorteil, daß die Längsseite 31 des Türflügels 3 im Bereich dessen Schwenkachse in Offenstellung des Türflügels 3 in den freien Raum zwischen den U-Schenkeln etwas hineinragen kann und bei Schließstellung dichtend gegen die Dichtleiste 43 am Seitenanschlag 4 angedrückt wird, welche am freien Ende des dem Mittelgang nahen U-Schenkels des Seitenanschlags 4 befestigt ist. Für diese Anordnung von Türflügel 3 und Seitenanschlag 4 sind die in Fig. 2 dargestellten Stützlager mit Schwenkarm 371 von Vorteil. Entsprechend sind die Verhältnisse, wenn der Türflügel 3 im Bereich des gegenüberliegenden Seitenanschlags 4 schwenkbar angeordnet ist.

Diese einfach lösbaren und abzunehmenden Seitenanschläge 4, die aus zumindest feuerhemmenden, wenn nicht feuerbeständigem Material bestehen, bieten die ohne jegliche Hilfsmittel oder Werkzeuge wahrzunehmende Möglichkeit, diese Seitenanschläge 4 rasch zu entfernen. Dabei ist es ein Vorteil der Einhängehalterung 41, daß ein abgenommener Seitenanschlag 4 ohne weiteres an anderer Stelle, beispielsweise der gegenüberliegenden Pritschenanordnung 2, eingehängt und so raumsparend und ohne zu behindern zwischengelagert werden kann.

Durch Abnehmen der Seitenanschläge 4 und durch entsprechende Wahl der Anschlagstelle des Türflügels 3 ist es möglich, wahlweise die eine oder die andere längs der Kabelwände 11, 12 verlaufende Pritschenanordnung 2 von vertikalen und den Zugang zu den einzelnen Kabelpritschen vom Mittelgang her behindernden Streben, wie Seitenanschläge, Türrahmen oder dergleichen, frei zu halten. Dadurch können Kabel 20, die im Mittelgang auf einfache und schonende Weise ausgezogen worden sind, von dort ohne weiteres in die gewünschte Kabelpritsche 21 eingeschoben und eingelegt und auch wieder entfernt werden. Ein Umfädeln von vertikalen Streben und Türpfosten, wie es bei Türzargen notwendig wäre, ist im vorliegenden Fall entbehrlich. Diese führt zu Zeit und Kosten sparenden, sowie Beschädigungen der Kabel vermeidenden Verlegearbeiten.

Zum Abschluß der Teile des Kanelquerschnitts innerhalb der Pritschenanordnungen 2 sind Pritschenabschottungen 5 vorgesehen. Wie aus Fig. 7 ersichtlich sind hier die Pritschenabschottungen 5 aus einem Halteteil 52 und einer Art Vorhang 51 aufgebaut. Das Halteteil 52 wird mit seinem hakenförmig ausgebildeten Halteteil 53 über eine Pritschensprosse 211, das ist eine quer zu den Pritschenholmen 212 verlaufende Strebe, gehängt. Am unteren Ende des Halteteils 52, das im Abstand von den Kabeln 20 der darunter angeordneten Kabelpritsche 21 endet, ist eine Schürze oder ein Vorhang 51 aus zumindest feuerhemmendem, vorzugsweise feuerbeständigem, flexiblem Material über eine anschraubbare Klemmleiste 55 befestigt. Das freie Ende des Vorhangs 51, der vorzugsweise aus einem anschmiegbaren Gewebe, einem Asbest-Gewebe, besteht, liegt auf den Kabeloberflächen auf. Auf Grund seiner Anschmiegbarkeit paßt es sich genau den Konturen der Belegung der Kabel 20 der darunter liegenden Kabelpritsche 21 an. Auf diese Weise ist eine lösbar angeordnete, ausreichend dichte Pritschenabschottung 5 gegeben mit einer weitgehenden Variabilität und Anpaßbarkeit an unterschiedliche Kabelbelegungen und -durchmesser. Zur Erhöhung des Kontakts und der Abdichtung zwischen dem Vorhang 51 aus Asbest-Gewebe und der Oberfläche der Kabelbelegung wird vorzugsweise noch ein Spritzasbestschaum 54 im Kontaktbereich zwischen Gewebe und Kabelbelegung aufgegeben.

**Patentansprüche**

1. Brandschutzabschluß zur Abschottung in einem begehbaren Kabelkanal, in welchem wenigstens eine längs der Kabelwände (11) verlaufende, sich zwischen Kanaldecke (12) und Kanalboden (13) erstreckende, aus im Abstand übereinander und in einer Vertikalen fluchtend angeordneten Kabelpritschen (21) aufgebaute Pritschenanordnung (2) mit Pritschenabschottungen (5) zum Abschluß des Kanalquerschnitts im Bereich der Pritschenanordnung (2) und zum Abschluß des von der Pritschenanordnung (2) belassenen, begehbaren Teils (1) des lichten Kanalquerschnitts ein Türabschluß mit einem schwenkbar gelagerten, in Schließstellung mit den Pritschenabschottungen (5) ausgerichteten Türflügel (3) vorgesehen sind, dadurch gekennzeichnet, daß der Türflügel (3) im Bereich der Kanaldecke (12) oder im Bereich der Kanaldecke (12) und im Bereich des Kanalbodens (13) schwenkbar gelagert ist, eine Rundum-Dichtlippe (39) aufweist, selbsttätig aus der Normal- oder Offenstellung in die Schließstellung bewegbar ist und in Schließstellung mit wenigstens einem einer der beiden Türflügellängsseiten (31) sowie der dieser benachbarten Pritschenanordnung (2) zugeordneten, unabhängig vom Türflügel (3) lösbar im Kabelkanal angeordneten Seitenanschlag (4) den Türabschluß bildet.

2. Brandschutzabschluß nach Anspruch 1,

## 11

dadurch gekennzeichnet, daß der Türflügel (3) im Bereich seiner Oberseite (32) über einen Träger (15) an der Kanaldecke (12) und im Bereich seiner Unterseite (33) über einen Träger (16; 16') am Kanalboden (13) um eine vertikale Achse schwenkbar angeschlagen ist.

3. Brandschutzabschluß nach Anspruch 2, dadurch gekennzeichnet, daß der Türflügel (3) wahlweise im Bereich seiner einen Längsseite (31) oder im Bereich seiner anderen Längsseite (31) anschlagbar ist.

4. Brandschutzabschluß nach Anspruch 1, 2 oder 3, dadurch gekennzeichnet, daß zum Anschlagen des Türflügels (3) vertikal verschiebbare, in entsprechende Aufnahmeteile (362) einsteckbare Lagerbolzen (361, 361') vorgesehen sind.

5. Brandschutzabschluß nach Anspruch 4, dadurch gekennzeichnet, daß zum Anschlagen des Türflügels (3) ein an der Oberseite (32) des Türflügels (3) ausschiebbarer und in ein gegen eine Rückstellkraft um eine vertikale Achse drehbares Aufnahmeteil (362) am Träger (15) drehfest einsteckbarer Lagerbolzen (361) und zum Anschlagen an der Unterseite (33) ein Stützlager vorgesehen ist.

6. Brandschutzabschluß nach Anspruch 5, dadurch gekennzeichnet, daß als Stützlager ein am Kanalboden (13) angeordneter Schwenkarm (371) vorgesehen ist, der eine Aussparung zur drehfesten Aufnahme des einsteckbaren Lagerbolzens (361') aufweist.

7. Brandschutzabschluß nach einem der Ansprüche 1 bis 6, dadurch gekennzeichnet, daß der Türflügel (3) aus einem Rahmen (34) und einer Türfüllung (35) aus einem durch Faustschläge oder Fußtritte zerstörbaren Material besteht.

8. Brandschutzabschluß nach einem der Ansprüche 1 bis 7, dadurch gekennzeichnet, daß der Seitenanschlag (4) an den Kabelpritschen (21) einer Pritschenanordnung (2) lösbar befestigt ist.

9. Brandschutzabschluß nach Anspruch 8, dadurch gekennzeichnet, daß als Befestigungsmittel eine Klemmbügelhalterung (42) vorgesehen ist.

10. Brandschutzabschluß nach Anspruch 8 oder 9, dadurch gekennzeichnet, daß der Seitenanschlag (4) an wenigstens einem Pritschenholm (212) einer Kabelpritsche (21) anhängbar ist.

## Revendications

1. Fermeture de protection contre l'incendie pour un cloisonnement dans une galerie à câbles praticable, dans laquelle il est prévu au moins un ensemble d'étagères (2), formé d'étagères à câbles (21) disposées à intervalles l'une au-dessus de l'autre et alignées verticalement, cet ensemble étant placé le long des parois à câbles (11) et s'étendant entre le plafond (12) et le sol (13) de la galerie, et étant pourvu de cloisonnements d'étagères (5) ser-

## 12

vant à obturer la section de galerie dans la zone de l'ensemble d'étagères (2) ainsi qu'une fermeture à porte servant à obturer la partie praticable (1) de la section libre de galerie qui est laissée par l'ensemble d'étagères (2), cette porte comportant un battant (3) monté à pivotement et venant s'aligner avec les cloisonnements d'étagères (5) dans une position de fermeture, fermeture caractérisée en ce que le battant de porte (3) est monté à pivotement dans la zone du plafond de galerie (12), ou bien dans la zone du plafond de galerie (12) et dans la zone du plancher de galerie (13), comporte une lèvre d'étanchéité périphérique (39), est automatiquement déplaçable de la position normale ou d'ouverture jusque dans la position de fermeture et assure dans la position de fermeture, l'obturation de porte avec au moins une butée latérale (4) associée à l'un des deux côtés longitudinaux (31) du battant de porte ainsi qu'à l'ensemble d'étagères (2) qui lui est adjacent, en étant disposée de façon séparable dans la galerie à câbles, indépendamment du battant de porte (3).

2. Fermeture de protection contre l'incendie selon la revendication 1, caractérisée en ce que le battant de porte (3) est monté de façon à pouvoir pivoter autour d'un axe vertical, dans la zone de son côté supérieur (32) par l'intermédiaire d'un support (15) sur le plafond (12) de galerie, et dans la zone de son côté inférieur (33) par l'intermédiaire d'un support (16; 16') sur le plancher (13) de galerie.

3. Fermeture de protection contre l'incendie selon la revendication 2, caractérisé en ce que le battant de porte (3) peut être monté sélectivement dans la zone d'un de ses côtés longitudinaux (31) ou bien dans la zone de son autre côté longitudinal (31).

4. Fermeture de protection contre l'incendie selon l'une des revendications 1, 2 ou 3, caractérisée en ce que, pour le montage du battant de porte (3), il est prévu des pivots (361, 361') pouvant être emboîtés dans des parties réceptrices correspondantes (362) et deplaçables verticalement.

5. Fermeture de protection contre l'incendie selon la revendication 4, caractérisée en ce que, pour le montage du battant de porte (3), il est prévu un pivot (361) pouvant coulisser sur le côté supérieur (32) du battant de porte (3) et pouvant être emboîté, sans possibilité de rotation relative, dans une partie réceptrice (362) placée sur le support (15) et pouvant tourner en opposition à une force de rappel autour d'un axe vertical et en ce qu'il est prévu pour le montage sur le côté inférieur (33) un palier d'appui.

6. Fermeture de protection contre l'incendie selon la revendication 5, caractérisée en ce que, comme palier d'appui, il est prévu un bras pivotant (371) disposé sur le plancher (13) de la galerie et qui comporte un évidement pour recevoir, sans possibilité de rotation relative, le pivot emboîtable (361').

7. Fermeture de protection contre l'incendie selon l'une des revendications 1 à 6, caractérisée en ce que le battant de porte (3) se compose d'un châssis (34) et d'un remplissage de porte (35) formé d'un matériau pouvant être brisé par coup de poing ou coup de pied.

8. Fermeture de protection contre l'incendie selon l'une des revendications 1 à 7, caractérisée en ce que la butée latérale (4) est fixée de façon séparable sur les étagères à câbles (21) d'un ensemble d'étagères (2).

9. Fermeture de protection contre l'incendie selon la revendication 8, caractérisée en ce qu'il est prévu comme moyen de fixation un support à étrier de blocage (42).

10. Fermeture de protection contre l'incendie selon l'une des revendications 8 ou 9, caractérisée en ce que la butée latérale (4) peut être suspendue à au moins un longeron d'étagère (212) d'une étagère à câbles (21).

**Claims**

1. A fire protection closing for sealing in an accessible cable duct, in which are provided at least one platform arrangement (2) having platform seals (5) and which runs along the cable walls (11), extends between the top (12) of the duct and the bottom (13) of the duct and comprises cable platforms (21) which are superimposed at a spacing and are aligned in a perpendicular, to seal off the duct cross section in the region of the platform arrangement (2) and to seal off the accessible part (1) of the clear duct opening left by the platform arrangement (2), and a door closing having a pivotally mounted door wing (3) which is aligned in the closed position with the platform seals (5), characterised in that in the region of the top (12) of the duct or in the region of the top (12) of the duct and in the region of the bottom (13) of the duct, the door wing (3) is mounted pivotally, has an all-round sealing lip (39), may be moved automatically out of the normal or open position into the closed position, and forms the door closing in the closed position with at least one side stop (4) which is allocated to one of the two longitudinal sides (31) of the door wing and to the platform arrangement (2) adjacent thereto, and which is positioned detachably in the cable duct independently of the door wing (3).

2. A fire protection closing according to claim 1, characterised in that the door wing (3) is fastened pivotally about a vertical axis to the top (12) of the duct via a support (15) in the region of its upper surface (32), and to the bottom (13) of the duct via a support (16; 16') in the region of its lower surface (33).

3. A fire protection closing according to claim 2, characterised in that the door wing (3) may be fastened selectively in the region of its one longitudinal side (31) or in the region of its other longitudinal side (31).

4. A fire protection closing according to claim 1, 2 or 3, characterised in that vertically displaceable bearing bolts (361, 361') which may be inserted into corresponding receiving parts (362) are provided to fasten the door wing (3).

5. A fire protection closing according to claim 4, characterised in that a bearing bolt (361) which may be pushed out on the upper surface (32) of the door wing (3) and may be inserted in a rotation-fast manner into a receiving part (362) on the support (15), which part (362) may be rotated about a vertical axis against a restoring force, is provided to fasten the door wing (3), and a supporting bearing is provided for fastening on the lower surface (33).

6. A fire protection closing according to claim 5, characterised in that a swivel arm (371) positioned on the bottom (13) of the duct is provided as the supporting bearing and it has an opening for the anti-rotation accommodation of the insertable bearing bolt (361').

7. A fire protection closing according to one of claims 1 to 6, characterised in that the door wing (3) comprises a frame (34) and a door panel (35) of a material which may be destroyed by kicks or blows with the fist.

8. A fire protection closing according to one of claims 1 to 7, characterised in that the side stop (4) is detachably secured to the cable platforms (21) of one platform arrangement (2).

9. A fire protection closing according to claim 8, characterised in that a binding clip holding device (42) is provided as an attachment means.

10. A fire protection closing according to claim 8 or 9, characterised in that the side stop (4) may be suspended on at least one platform beam (212) of a cable platform (21).

0 0 1 4 949

Fig. 1

Fig. 3

Fig. 2

## Fig. 4

## Fig. 5

## Fig. 6

Fig. 1